# EUROPEAN PATENT SPECIFICATION

(11) **EP 2 375 596 B1**
(45) Date of publication and mention of the grant of the patent: **19.11.2014**
(21) Application number: 10305319.5
(22) Date of filing: 29.03.2010
(51) Int. Cl.: H04B 13/00

(54) **Capacitively coupled communications system**
Kapazitiv gekoppeltes Kommunikationssystem
Système de communication à capacité couplée

(43) Date of publication of application: 12.10.2011
(73) Proprietor: ALCATEL LUCENT, 92100 Boulogne-Billancourt (FR)
(72) Inventor: Dobbelaere, Philippe, 2520, Broechem (BE); Roelands, Marc, 2500, Lier (BE); Godon, Marc, 1840, Londerzeel (BE); Feki, Mohamed Ali, 1190, Brussel (BE)
(74) Representative: Vandenbroeck, Josiane Anne Marie

(56) References cited:
- WO-A1-2009/075420
- WO-A1-2009/113759
- US-A1- 2009 004 982
- US-A1- 2010 045 446

## Description

The present invention relates to a communications system for close or near field communications, e.g. in the range of millimetres to centimetres, between transmitters and receivers.

Traditional communication over these short distances is based on RFID devices, also referred to as an RFID tag, which are applied to or incorporated into a product, animal, or person for the purpose of identification and tracking using radio waves. Some tags can be read from several meters away and beyond the line of sight of the reader. RFID techniques however suffer from several disadvantages. A first one concerns the bad selectivity, meaning that anything in the detection range is detected and the threshold is difficult to control. Furthermore there is limited transport security as e.g. all readers of a given proximity technology can read all tags for that technology. There is also no opportunity for applications in interactive systems. Simultaneous reading of multiple tags with similar signal strengths by a reader is also extremely hard to do. Published US patent application US 2010/0045446 describes such a RFID system using human body communications.

Another short-distance communication system is described in the Master's Thesis of T.G. Zimmerman " Personal Area Networks (PAN) : near-field intra-body Communication" Master of Science in Media arts and Sciences at the Massachusetts Institute of Technology, September 1995. In this thesis a wireless technology is disclosed that allows electronic devices on and near a human body to exchange digital information through near-field electrostatic coupling. Information is transmitted by modulating electric fields and capacitively coupling small currents into the body. The environment such as the air or earth ground provides a return path for a transmitted signal.

Again a modulation scheme is also used, as traditional RF channels do.

This approach has however several disadvantages. A first one concerns the complexity of the modulator and demodulator, while a second one relates to the fact that the demodulation gives only significantly good results if the carrier wave of the modulation is sufficiently stable. To guarantee this stability crystal generators in the transmitter are usually needed. Again this adds to the complexity and cost. Moreover such crystal generators are not mechanically robust. A third one relates to the manufacturing cost of the modulators and demodulators as well as to the power consumption when establishing a channel between transmitter and receiver based on a modulator/demodulator.

Published US patent application US2009/0004982 discloses a portable device for data communication using a body as a conductor to transmit data to a receiver. The portable device includes a data receiving unit to receive data, a controller unit to control processing of data to be transmitted, a current limiting circuit to limit a current of a signal corresponding to the data to be transmitted to a predetermined value, and transmitting electrodes connected to the current limiting circuit and to contact the body to transmit the signal having the current of predetermined value to the receiver.

The published international PCT patent application WO2009/113759 discloses a modulation apparatus using a frequency selective baseband including a serial-to-parallel conversion unit converting serial data supplied from an upper layer into parallel data consisting of M+1 number of data input bits; and a frequency selective spreader selecting one subgroup among a plurality of subgroups obtained by dividing 2N number (where N is a positive integer) of spreading codes used for frequency spreading by 2M (where M is a positive integer), and MM number of spreading codes of the one subgroup by using the M number of data input bits, and spreading codes obtained by performing bit circular shifts on the 2M number of spreading codes. Accordingly, the number of transmission data is increased to improve a transmission data rate, strong interference induced from users and other electronic devices is reduced, and stable human body communication having low power consumption is performed.

It is thus an object of the present invention to provide a communications system and corresponding transmitter and receiver for enabling communications over these distances of millimetres to several centimetres of the above known kind, but which does not show the problems associated to the prior art.

According to the invention this object is solved by the transmitter being adapted to to transmit baseband signals over said channel towards said receiver, and further comprising a symbol encoder for encoding information to be transmitted with binary symbols having auto-correlation and cross-correlation properties, enabling symbol discrimination at a receiver receiving the encoded information transmitted by said transmitter, said symbols being characterized by their 0/1 and 1/0 edges, said transmitter further comprising identification logic permitting a unique identifier associated with said transmitter to be transmitted during said communication with a receiver.

Similarly the receiver is adapted to receive and discriminate baseband signals from over said channel from said transmitter. The resulting communications system therefore constitutes a baseband body area network capacitive communication network, comprising a plurality of such transmitters and receivers.

Compared to the traditional modulation-based body area networks, the thus proposed transmitters are much simpler and thus much cheaper, as they transmit baseband signals, and therefore do not need expensive modulation. Despite the fact that the resulting capacitively coupled body area network baseband system heavily distorts the transmitted signal because of the inherent high pass behaviour from the capacitive coupling itself, this distortion is not considered to be detrimental. Due to the fact that at the receiver again no demodulation circuitry is needed, some more complex data recovery can be implemented such that the overall system is still much cheaper compared to traditional modulation based near-field communications systems.

Using a baseband system is thus much cheaper and less complex compared to using a modulation scheme as in the prior art. Possible signal distorting due to the channel does not present a major problem for the envisaged applications, as at the receivers generally the zero to one and one to zero edges are to be discriminated. As these are not distorted by the capacitive channel a very simple, yet robust communication system is obtained.

The transmitter may further comprise a symbol encoder for encoding information to be transmitted with binary symbols having auto-correlation and cross-correlation properties, enabling symbol discrimination at a receiver receiving the encoded information transmitted by said transmitter.

This is still possible using very simple circuitry at the transmitter, whereas at the receiver logic for correlation determination will result in enhanced symbol recovery.

The transmitter can also further comprise identification logic permitting a unique identifier associated with said transmitter to be transmitted during said communication with a receiver.

This is especially useful for e.g. monitoring applications where each transmitter, by means of its unique identifier, can transfer information whenever it is approached by a human being which, by means of he or she touching the transmitter, will then cause the transmission channel to be established between this transmitter and a receiver e.g. attached to the body of the person with a suitable signal return path to the environment.

In other embodiments the transmitter may further comprise logic for providing sensor information as part of said information to be transmitted .

This can be useful for medical applications where sensors , e.g. temperature sensors for measuring of fever , can be coupled to or integrated in such a transmitter, which can then further transmit this information, if touched or in contact by a human being , to a receiver, of which one electrode is in contact or touched by this same person.

Other features are set out in the appended claims.

The above and other objects and features of the invention will become more apparent and the invention itself will be best understood by referring to the following description of an embodiment taken in conjunction with the accompanying drawings wherein:
Fig. 1 shows an embodiment of a body area network capacitive communications network ,
Fig. 2a schematically shows an embodiment of a transmitter,
Fig. 2b shows another embodiment a transmitter,
Fig. 3 schematically shows an embodiment of a receiver,

Body area networks, although described some time ago, recently received renewed attention.

Communication is then realized upon establishing capacitive contact via the human body as intermediate signal path. However such communication it is equally possible via objects having similar or suitable conductive or capacitive properties. Such a system therefore has a very good selectivity as the communications path or channel is only available when the desired capacitive coupling is present, e.g. via a connection of a series of objects amongst which a human body can be one , which touch each other or are in close proximity, in the order of a few millimetres. By means of coded information, separate transmitters can be equipped with separate coding schemes, allowing for an easy discrimination of the senders at the receiver. Transmitters can therefore still be very simple, low cost and extremely low power consuming, while the received signal does not depend upon the proximity but on the actual tactile contact .

While state of the art transmitters and receivers used in such a body area network are using a high frequency carrier for modulating the information, embodiments of the transmitters and receivers of the communications network according to this inventions use a baseband system.

An advantage of using baseband communications is that the transmitters can be extremely cheap. More importantly, this approach allows to shift the majority of the cost and energy consumption to the receiver, allowing for extremely small and cheap transmitters. They can be realized by means of a variety of technologies comprising, but not limited to flexible electronics, plastic semiconductors, printing circuitry with ink,...

In the applications envisaged, it is the aim to transport digital information. This means that the signal fidelity offered by a modulated scheme which was designed to transport analogue signals, not digital signals, is not needed.

Nevertheless, using baseband transmission also implies that the signal may get heavily distorted due to the channel, as the inherent capacitive coupling involves a high-pass behaviour.

In the embodiments envisaged this however does not present a major problem, as the transmitter comprises a signal encoder which is adapted to generate output signals which can withstand such distortion. This may be realized by encoding the information with symbols showing and being characterized by their 0/1 and 1/0 edges, which are not distorted by the channel at all as dirac impulses pass through capacitors in an almost unmodified way.

The codes furthermore are preferentially orthogonal, or at least have good autocorrelation and cross-correlation properties, meaning that, (auto)correlation of a same symbol for representing e.g. a "1", will give a very strong positive result, whereas the (cross)correlation of such a symbol for representing a "1" and the other symbol representing a "0" will provide a very strong negative result.

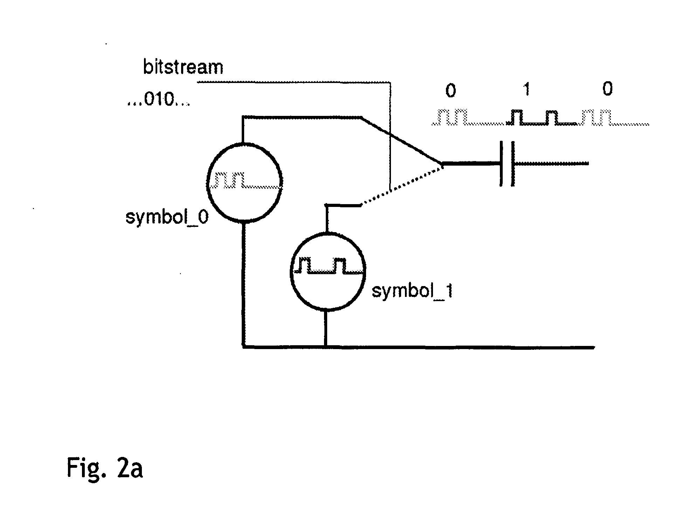

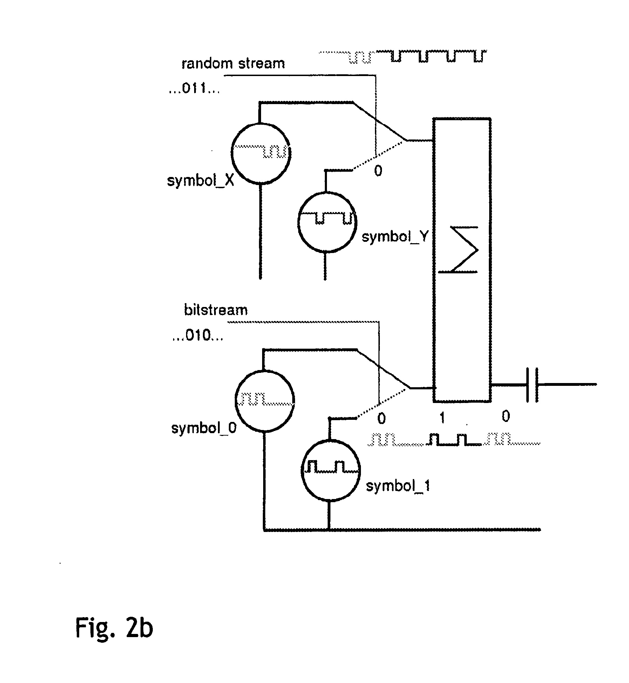

A very simple embodiment of a transmitter is shown in Fig. 2 . This transmitter is adapted to transmit a binary information bitstream, only comprising 0 and 1. This transmitter therefore comprises a symbol encoder comprising first logic, denoted "symbol_0" for encoding a "0" bit of information with the symbol represented by the grey value in the circle denoted "symbol_0" . When written binary this symbol thus corresponds with a value 0101000. The symbol encoder further comprises second logic , denoted "symbol_1" with the symbol represented by the black value in the circle denoted "symbol_1 ", for encoding a "1" bit of information.. When written binary this symbol corresponds with 0100010.

Of course other codes can be used for this symbol encoding. Preferrably the selected codes should have good autocorrelation and cross-correlation properties allowing a good recovery at the receiver. Orthogonal codes can be used for this purpose.

The transmitter of Fig. 2 further comprises a switch, which is controlled by the information bitstream to be transmitted. If the information bitstream comprises a "1", the symbol for representing this "1" will be transmitted. Similarly if the information bitstream comprises a "0", the symbol for representing this "0" will be tranmitted by means of the simple control of the switch.

This information to be transmitted can be a unique transmitter identifier, allowing to discriminate all transmitters within the communications network, at least if these are not transmitting at the same time.

Another way allowing to discriminate different transmitters , which may simultaneously tranmit their information, is to use multiple symbols. In this case a receiver can only decode the message if it knows the symbols. This is particularly interesting for secure communications as only receivers which know the code can understand the transmitted information.

Alternatively, discrimination between several transmitters can be obtained in case a receiver knows all available codes .

As mentioned the transmitter of Fig. 2a includes a switch which is used to encode the complete information bitstream using the symbols from the symbol encoders. The rate at which this encoded bitstream is transmitted is controlled by an internal clock (not shown) in the transmitter. However, unlike the modulation-based body communications networks, there are no severe accuracy constraints associated to the transmitter clock, such that it can be kept and realized in a very simple way. An implementation may be under the form of an astable multivibrator comprising only two transistors and two capacitors.

The information to be transmitted may be fixed, e.g. a fixed unique transmitter identifier stored in a memory within the transmitter. In more complex embodiment the information may further comprise some measurement or sensor data , possibly combined with the identifier information. In these embodiments the transmitter is coupled to such a sensor, or includes the sensor. In yet other embodiments more complex data, e.g. provided by a processor or a gaming device coupled to the transmitter, or in which the transmitter can be integrated, can be transmitted This latter case actually describes a capacitively coupled network between devices, that can be used just like Bluetooth or IrDA can be used for short range wireless today. In even other embodiments such transmitter can be integrated into even other communications devices coupled to other communications networks, allowing to receive further information from these other communications networks. An example of this may be a mobile phone or a laptop with internet access, comprising such a transmitter. In this way an alternative to biometric authentication can be realized.

The transmitter can send its information message repetitively (like once a second) when power is available. The powering itself can be by magnetic induction or electrically , using classical batteries or using energy scavenging.

Fig. 2b shows a more complex embodiment of a transmitter. Compared to Fig. 2a this embodiment comprises an additional pair of symbol encoders, denoted "symbol X" and "symbol Y" respectively, adapted to encode a "0" , resp "1" bit with the X, resp. Y symbol . Each X or Y symbol is being represented by another chain of 0 and 1 values. These X and Y symbol encoders are adapted to operate in parallel with the "normal" 0 and 1 symbol encoders, and their outputs are added, by a summation means. The resulting output series of bits will thus be rather blurry, such that receivers who do not know the symbol code will not be able to discriminate the real "0" and "1" symbols , as these encoders are controlled by a random signal, provided by a random signal generator. Via the correlation performed at a receiver aware of the correct code, the correct symbols are anyhow retrievable from the received noisy signal.

The symbols X and Y on the other hand do not show strong correlation with the symbols used for data transmission. In this way scrambling of the information data is obtained.

This scrambling can of course also be realized via only one scrambling symbol encoder or more than 2, being controlled by a random signal generator .

As previously mentioned, embodiments of receivers will thus need more power to operate. Since the channel is bad, and because multiple transmitters are to be able to be discriminated by any receiver that is coupled to the transmitters, the received information bitstream is encoded by means of symbols that have suitable correlation properties. If multiple transmitters are then transmitting information to the same receiver at the same time, the receiver will see a superposition of multiple symbols coming from the different transmitters or even individual transmitters. Since the symbols have suitable auto-correlation and cross-correlation properties, the receiver can demultiplex and recover the symbols coming from the respective transmitters, even if the individual edges of the symbols would fully coincide with each other, or even if the information from an individual transmitter is scrambled, as realized by embodiments as in Fig. 2b.

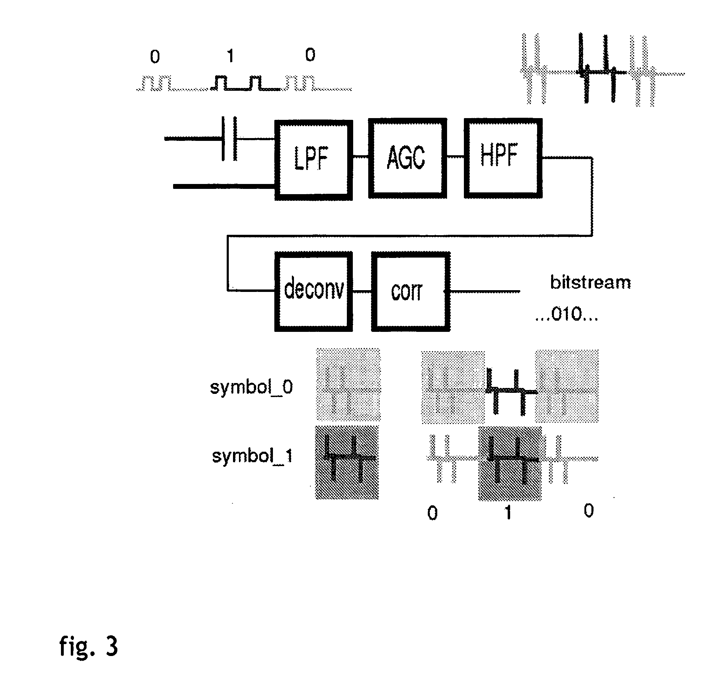

An embodiment of a receiver is shown in Fig. 3. Signals are received in an analog front end which may comprise a lowpass filter LPF, an automatic gain control amplifier AGC and a high pass filter HPF. The low pass filter LPF is adapted to cut off all the noise above the signal frequency. The automatic gain control AGC tries to normalize the level of the signal to useful values. To train the AGC in the receiver, a preamble may be added in front of the first symbol, possibly in front of every symbol.

The high pass filter HPF further cuts off all noise below the signal frequency. Since DC levels are blocked too, the received waveforms change to impulses. Note that LPF and HPF can have a gain above 1, and the AGC can also be put after the filters.

This analog front end is followed by a deconvolutor denoted deconv which uses a single impulse response of the LPF-AGC-HPF combination to restore the signal to a more ideal representation of dirac pulses corresponding to the edges of the original signal. The correlator denoted corr is adapted to calculate the cross-correlation between the signal and the unit-pulse equivalent of symbol_0 and symbol_1. Whenever the correlation exceeds a threshold, the correlator decides it has recognized the symbol in the signal. This way, the original bitstream is recovered.

The symbol recognition part comprising the deconvolutor and the correlator can be implemented on a processor e.g. a DFT coprocessor). As for the transmitter the stability of the receiver clock is only needed during the symbol duration, which is relatively simple to realize. An example of such a transmitter/receiver combination via a capacitively coupled path can e.g. be a transmitter in a shoe, capacitively coupled to the floor at one side and the human body at the other side; and a receiver connected to a door handle at one side, and the same floor at the other side It is obvious that the act of a human hand touching the door handle would establish a capacitive path between transmitter and receiver, with the floor used as a signal return path.

As a consequence of the transmission, application logic at the receiver can then conclude that that person had just tried to open or close this door.

Remark that this use case is not restricted to the human body as intermediate signal path, but could equally be applied to objects with suitable conductive properties such as animals or glasses of liquids .

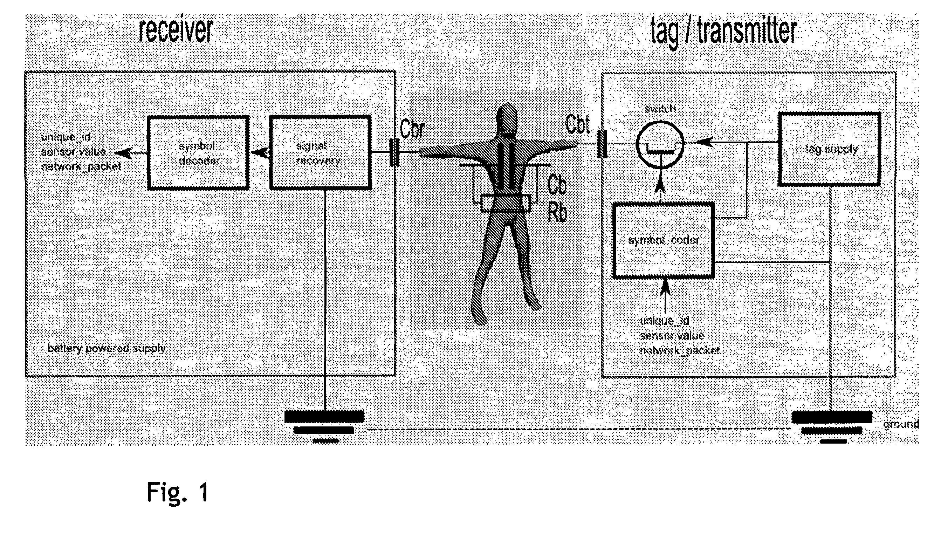

It is to be remarked that the path is only available when capacitive contact is established. Depending on the dimensioning of the electrodes, being Cbr en Cbt in Fig 1, used, this could mean a contact distance from less than a mm to a few cm.

This system has a very good selectivity: the path is only available when transmitter and receiver are coupled by a series of objects, such as a human body as mentioned in the previous example, that touch each other. Using unique codes on different transmitters, it is easy to detect which transmitter has touched the receiver.

The transmitter - receiver combination can also be used in several modes: in a first mode the bitstream transmitted can be a simple serial ID (comparable to RFID tags). In another one the bitstream transmitted could be a digital representation of a sensor value. This allows to e.g. read out the sensor value by simply touching the device. But, as already mentioned the transmitter - receiver pair could be used as a data network, for instance a mobile device carried by person A could transmit e.g. a VCARD datastructure. On simple handshake, the mobile device of the other person could receive the VCARD and application logic could conclude that person A just encountered person B.

While the principles of the invention have been described above in connection with specific apparatus, it is to be clearly understood that this description is made only by way of example and not as a limitation on the scope of the invention, as defined in the appended claims. In the claims hereof any element expressed as a means for performing a specified function is intended to encompass any way of performing that function. This may include, for example, a) a combination of electrical or mechanical elements which performs that function or b) software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

## Claims

1. Transmitter for communication via a body area network capacitive channel with a receiver, said transmitter being adapted to transmit baseband signals over said channel towards said receiver, and further comprising a symbol encoder adapted for encoding information to be transmitted with binary symbols having auto-correlation and cross-correlation properties wherein said symbols are **characterized by** their 0/1 and 1/0 edges, enabling symbol discrimination at a receiver receiving the encoded information transmitted by said transmitter,
said transmitter further comprising identification logic permitting a unique identifier associated with said transmitter to be transmitted during said communication with a receiver.

2. Transmitter according to claim 1, further comprising logic for providing sensor information as part of said information to be transmitted .

3. Transmitter according to any of the claims 1-2 further comprising at least another symbol encoder for encoding random information with binary symbols without auto-correlation and cross-correlation properties, thereby generating random encoded data for being superimposed with the encoded information to be transmitted for scrambling purposes.

4. Receiver for communication via a body area network capacitive channel with a transmitter in accordance to any of the claims 1-3, said receiver being adapted to receive and discriminate baseband signals from over said channel from said transmitter.

5. Receiver according to claim 4 further comprising signal recovery circuitry and a symbol decoder.

6. System for providing a baseband body area network capacitive communication network, said system comprising a plurality of transmitters and receivers according to any of the previous claims.

## Patentansprüche

1. Sender für die Kommunikation über einen kapazitiven Kanal eines körpernahen Netzwerks mit einem Empfänger, wobei der besagte Sender für die Übertragung von Basisbandsignalen über den besagten Kanal an den besagten Empfänger ausgelegt ist und weiterhin einen Symbol-Codierer umfasst, welcher dazu ausgelegt ist, zu übertragende Informationen mit Binärsymbolen, welche Autokorrelations- und Kreuzkorrelationseigenschaften aufweisen, zu codieren, wobei die besagten Symbole durch ihre 0/1- und 1/0-Flanken gekennzeichnet sind, um eine Symbolunterscheidung an einem Empfänger, welcher die von dem besagten Sender übertragenen codierten Informationen empfängt, zu ermöglichen, wobei der besagte Sender weiterhin eine Identifikationslogik umfasst, welche eine während der besagten Kommunikation mit einem Empfänger zu übertragende, mit dem besagten Sender assoziierte eindeutige Kennung ermöglicht.

2. Sender nach Anspruch 1, weiterhin umfassend eine Logik zur Bereitstellung von Sensorinformationen als Teil der besagten zu übertragenden Informationen.

3. Sender nach einem beliebigen der Ansprüche 1-2, weiterhin umfassend mindestens einen weiteren Symbol-Codierer zum Codieren von Zufallsinformationen mit Binärsymbolen ohne Autokorrelations- und Kreuzkorrelationseigenschaften, wodurch nach dem Zufallsprinzip codierte Daten für die Überlagerung mit den zu übertragenden codierten Informationen für Verwürfelungszwecke erzeugt werden.

4. Empfänger für die Kommunikation über einen kapazitiven Kanal eines körpernahen Netzwerks nach einem beliebigen der Ansprüche 1-3, wobei der besagte Empfänger für den Empfang und das Unterscheiden von Basisbandsignalen über den besagten Kanal von dem besagten Sender ausgelegt ist.

5. Empfänger nach Anspruch 4, weiterhin umfassend eine Signalwiederherstellungsschaltung und einen Symbol-Decodierer.

6. System zur Bereitstellung eines kapazitiven Kommunikationsnetzwerks eines körpernahen Basisband-Netzwerks, wobei das besagte System eine Vielzahl von Sendern und Empfängern gemäß einem beliebigen der vorstehenden Ansprüche umfasst.

## Revendications

1. Émetteur pour la communication par l'intermédiaire d'un canal capacitif de réseau corporel avec un récepteur, ledit émetteur étant adapté pour transmettre des signaux de bande de base sur ledit canal vers ledit récepteur, et comprenant en outre un codeur de symboles, pour coder des informations à transmettre avec des symboles binaires ayant des propriétés d'auto-corrélation et de corrélation croisée, permettant la discrimination de symboles au niveau d'un récepteur recevant les informations codées transmises par ledit émetteur, lesdits symboles sont **caractérisés par** leurs fronts 0/1 et 1/0, ledit émetteur comprenant en outre une logique d'identification permettant à un identifiant unique associé audit émetteur d'être transmis durant ladite communication avec un récepteur.

2. Émetteur selon la revendication 1, comprenant une logique pour fournir des informations de capteur en tant ,que partie desdites informations à transmettre.

3. Émetteur selon l'une quelconque des revendications 1 et 2 comprenant en outre au moins un autre codeur de symboles pour coder des informations aléatoires avec des symboles binaires sans propriétés d'auto-corrélation et de corrélation croisée, générant ainsi des données codées aléatoires à superposer sur les informations codées devant être transmises à des fins de brouillage.

4. Récepteur pour la communication par l'intermédiaire d'un canal capacitif de réseau corporel avec un émetteur selon l'une quelconque des revendications 1 à 3, ledit récepteur étant adapté pour recevoir et discriminer des signaux de bande de base sur ledit canal à partir dudit émetteur.

5. Récepteur selon la revendication 4 comprenant en outre des circuits de récupération de signaux et un décodeur de symboles.

6. Système pour fournir un réseau de communication capacitif de réseau corporel en bande de base, ledit système comprenant une pluralité d'émetteurs et de récepteurs selon l'une quelconque des revendications précédentes.
